(19) Europäisches Patentamt
European Patent Office
Office européen des brevets

(11) Veröffentlichungsnummer: **0 027 673**
**B1**

(12) # EUROPÄISCHE PATENTSCHRIFT

(45) Veröffentlichungstag der Patentschrift: **25.01.84**

(51) Int. Cl.³: **C 04 B 35/64,** H 01 L 21/00, C 04 B 21/06

(21) Anmeldenummer: **80200972.0**

(22) Anmeldetag: **15.10.80**

(54) **Verfahren zum Herstellen von Formkörpern oder Schichten aus anorganischen Stoffen.**

(30) Priorität: **18.10.79 DE 2942109**

(43) Veröffentlichungstag der Anmeldung: **29.04.81 Patentblatt 81/17**

(45) Bekanntmachung des Hinweises auf die Patenterteilung: **25.01.84 Patentblatt 84/4**

(84) Benannte Vertragsstaaten: **BE DE FR GB IT**

(56) Entgegenhaltungen:
**FR - A - 1 095 450**
**US - A - 3 973 439**
**US - A - 4 056 588**

**IBM TECHNICAL DISCLOSURE BULLETIN, Band 10, Nr. 8, Januar 1968, C.G. KLEM "Catalytic Burnoff of Photoresists" Seite 1327**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **BE FR GB IT**

(72) Erfinder: **Sprangers, Wilhelmus, Dr., Caumerboord 43, Heerlen (NL)**
Erfinder: **Dijkstra, Rinse, Mathijsenlaan 1, Eindhoven (NL)**

(74) Vertreter: **Piegler, Harald, Dipl.-Chem., Philips Patentverwaltung GmbH**
**Billstrasse 80 Postfach 10 51 49, D-2000 Hamburg 28 (DE)**

**EP 0 027 673 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum Herstellen von Formkörpern oder Schichten aus anorganischen Stoffen

Die Erfindung betrifft ein Verfahren zum Herstellen von Formkörpern oder Schichten aus anorganischen Stoffen, bei dem einem Ausgangsgemisch, das die anorganische Stoffe enthält, polymere organische Stoffe zugesetzt werden, die später durch Ausheizen wieder entfernt werden.

Unter Formkörpern sind z.B. geformte keramische Erzeugnisse zu verstehen. Bei den anorganischen Stoffen handelt es sich z.B. um solche auf Ferritbasis. Die polymeren Stoffe dienen in diesen Fällen z.B. als Bindemittel. So ist z.B. aus der DE-A1-2 509 696 ein Verfahren zum Herstellen von Sinterkeramik bekannt, bei dem keramische Rohlinge, die sinterfähige keramische Materialien mit organischen Bindemitteln, deren Zersetzungstemperaturen in einem Temperaturbereich von etwa 200 bis 800°C liegen, vermengt enthalten, derart erhitzt werden, dass die organischen Bindemittel zersetzt werden.

Aus der FR-A-1 095 450 ist ein Verfahren zur Herstellung von Formkörpern bekannt, bei dem einem Gemisch aus anorganischen Stoffen und polymeren organischen Stoffen eine organische Vanadiumverbindung zugesetzt wird. Anschliessend wird bei 1400 bis 1850°C gebrannt.

Unter Schichten aus anorganischen Stoffen sind z.B. lumineszierende oder fluoreszierende Schichten, z.B. von Leuchtschirmen, zu verstehen. So sind z.B. aus den DE-A1-1 564 446 und 1 948 017 Verfahren zum Herstellen von Leuchtschirmen für Kathodenstrahlröhren bekannt. Bei dem Verfahren nech der DE-A1-1 948 017 setzt sich ein Leuchtstoff, der in eine über einem Leuchtschirmträger stehende Sedimentationsflüssigkeit eingebracht wird, auf dem Leuchtschirmträger ab. Als Sedimentationsflüssigkeit wird z.B. eine 0,2- bis 1%ige Polyvinylalkohol-Lösung verwendet. Nach erfolgtem Absetzen des Leuchtstoffes wird die Sedimentationsflüssigkeit abgegossen. Danach wird der Leuchtschirm getrocknet und dann bei etwa 430°C über eine Zeit von etwa einer halben bis zwei Stunden ausgeheizt. Nach der DE-A1-1 564 446 beruht die Herstellung von Mehrstoff-Leuchtstoffrastern für Leuchtschirme von Farbbildröhren auf der Herstellung von aufeinanderfolgenden Schichten von lichtempfindlichen Widerstandselementen, die die einzelnen Leuchtschirmelemente enthalten, und der darauffolgenden Entfernung der organischen Bindemittel für derartige Leuchtstoffe. Die Leuchtstoffmaterialien zur Herstellung der einzelnen Farbelemente eines solchen Leuchtschirmes (rot, blau, grün) werden nacheinander auf die Leuchtschirmoberfläche dadurch aufgetragen, dass vorherbestimmte Flächenbereiche lichtempfindlicher Filme, welche solche Stoffe enthalten, aktinischem Licht ausgesetzt werden und dass darauf die belichteten Filme entwickelt werden, so dass sich die einzelnen Leuchtstoffelemente bilden. Die dabei benutzten leuchtstoffhaltigen lichtempfindlichen Schichtzusammensetzungen enthalten u.a. ein organisches Kolloid, einen Sensibilisator und das Leuchtstoffmaterial. Das organische Kolloid, welches etwa 2 bis 5% der Schichtzusammensetzung ausmacht, kann ein kolloidaler Polyvinylalkohol oder ein kolloidales Polyvinylazetat sein. Auch bei diesem Verfahren wird der Leuchtschirm schliesslich ausgeheizt, damit sich der lichtgehärtete Polyvinylalkohol oder andere organische Kolloide von der zusammengesetzten Widerstandsschicht verflüchtigen und entfernen, wobei das gewünschter Raster aus grünen, blauen und roten Leuchtstoffelementen als Punkttriaden oder Linienraster zurückbleibt.

Aus der DE-B2-2 308 178 ist es bekannt, dass bei der elektrophotographischen Herstellung eines Bildschirmes einer Farbfernsehbildröhre eine ausheizbare elektrisch leitende Schicht und eine ausheizbare photoleitende Schicht über der elektrisch leitenden Schicht auf der Frontplatte der Röhre aufgebracht werden, sodann Leuchtstoffelemente eines ersten Musters und folgender Muster sowie eine lichtabsorbierende Schicht zwischen den Leuchtstoffelementen auf elektrophotographischem Wege aufgebracht werden und schliesslich die Frontplatte zur Entfernung der elektrisch leitenden Schicht und der photoleitenden Schicht ausgeheizt wird.

Die elektrisch leitfähige Schicht besteht üblicherweise aus Polymerisaten, wie z.B. Poly-diallyl--dimethyl-ammoniumchlorid, Polyvinylbenzyl-trimethyl-ammoniumchlorid, Copolymeren von Styrol mit Natrium- oder Kaliummaleinat und mit einem tertiären Amin quaternisiertem Poly-epichlorhydrin. Die photoleitfähige Schicht besteht üblicherweise aus Polymerisaten, wie z.B. Poly-N-vinylkarbazol (PVK), Poly-acenaphthylen und Poly-q-acryloylcarbazol. Diese Materialien werden üblicherweise in Form von Lösungen auf die Frontplatte bzw. auf die vorhergehende Schicht aufgebracht, wonach das Lösungsmittel verdampft wird. Als Lösungsmittel dienen üblicherweise Chlorbenzol, Tetrahydrofuran (THF), Methylenchlorid oder Tetrachloräthan (für PVK), Toluol oder Chloroform (für Poly-acenaphthylen) und Benzol oder Chloroform (für Poly-9-acryloylcarbazol).

Das Ausheizen der polymeren Stoffe, also z.B. der Bindemittel, der Sedimentationsflüssigkeiten, der elektrisch leitfähigen Schichten und der photoleitfähigen Schichten erfolgt üblicherweise mittels einer Wärmebehandlung bei etwa 450°C, wobei die Ausheiztemperatur materialbedingt ist, d.h. sie hängt von den Zersetzungstemperaturen der polymeren Stoffe ab, die in den Formkörpern und Schichten enthalten sind. Hierzu werden grosse und teure Öfen verwendet, wodurch auch die Energiekosten erheblich sind. Ferner führt die hohe Ausheiztemperatur häufig zu einer Schrumpfung der Formkörper bzw. zu einer Verformung der Frontplatte, wodurch der Abstand zwischen Frontplatte und Lochmaske stellenweise verändert wird. Darauf ergeben sich hohe Ausschussraten bzw. Nachbearbeitungskosten.

Aus der DE-A1-1 694 017 ist eine Polyolefinfolie bekannt, die einen Oxidationskatalysator enthält, der den Abbau des Polyolefins beschleunigt. Als Beispiele für derartige Katalysatoren werden die Acetylacetonate des Mangans, Kobalts, Chroms, Eisens, Kupfers und Vanadiums genannt. Bei diesem Abbau

des Polyolefins tritt jedoch keine vollständige Depolymerisation auf; lediglich der Polymerisationsgrad nimmt ab. Aus der DE-B2-2 142 591 sind thermoplastische Formmassen auf der Basis von Styrolpolymerisaten bekannt, die ein Eisen-, Kobalt-, Mangan- oder Kupferacetylacetonat enthalten. Auch in diesem Falle wird nur eine Verringerung des Polymerisationsgrads, nicht aber eine vollständige Depolymerisation angestrebt. Die Zersetzung erfolgt umso schneller, je mehr Comonomere mit Dien-Struktur eingebaut sind. Dies bedeutet, dass hier allein die Kohlenstoff-Kohlenstoff-Doppelbindungen gebrochen werden. Die Polymerisatpräparate nach der DE-B2-2 247 170 umfassen auch Mischpolymerisate von Äthylen mit N-Vinylkarbazol und Vinylalkohol. Als organisches «Salz», das den Abbau dieser Polymerisate bewirkt, wird Kobaltacetylacetonat genannt. Dabei werden jedoch ebenfalls nur die Kohlenstoff-Kohlenstoff-Doppelbindungen im Polyolefin-Teil des Mischpolymerisats gebrochen; sofern also Poly-N-vinylcarbazol-Anteile vorhanden sind, so bleiben diese unangetastet.

Die zuvor genannten Druckschriften befassen sich nur mit dem Abbau bzw. der Zersetzung von Kunststoffen durch Licht. Es ist ferner bekannt, dass sich hochmolekulare Dien-Polymere durch Erhitzen in Gegenwart von Sauerstoff, Übergangsmetallverbindungen, wie Kobaltacetylacetonat und organischen Säuren oder Anhydriden zu Oligomeren zersetzen (Chem. Abstr. 84 (1976) 5694 y). Bei einer Zersetzung zu Oligomeren besteht die Gefahr, dass die Formkörper und Schichten nicht vollständig ausgeheizt werden.

Aus der US-A-3 973 439 ist bekannt, dass die Überhitzung von Elektrogeräten überwacht werden kann, wenn die Geräte mit einem Überzug versehen werden, der aus einem Metallacetylacetonat und einem Harz besteht. Das Metallacetylacetonat zersetzt sich bei der Überhitzungstemperatur. Die Zersetzungsprodukte des Metallacetylacetonats werden in einem Gasstrom einer Messvorrichtung zugeleitet, die die Überhitzung anzeigt. Das Harz dient dabei lediglich als Klebstoff, es soll mit dem Metallacetylacetonat nicht reagieren, weil anderenfalls keine messbaren Zersetzungsprodukte in den Gasstrom gelangen. Von einer thermischen Zersetzung des Harzes ist also in der US-A-3 973 439 nicht die Rede.

Ferner ist es bekannt, Nickeldimethylglyoxim als Katalysator beim Ausheizen von Photoresist-Materialien zu verwenden, wodurch die zur vollständigen Entfernung einer Photoresist-Schicht erforderliche Temperatur von 500°C auf 380 bis 400°C gesenkt werden kann (IBM Technical Disclosure Bulletin 10 (8) (Jan. 1968) 1327). Dabei wird Nickeldimethylglyoxim auf eine Photoresist-Schicht aufgesprüht. Bei den Untersuchungen, die zur Erfindung geführt haben, wurde jedoch festgestellt, dass bei einem solchen Aufsprühen auf Formkörper oder z.B. auf die auf die Frontplatte einer Farbfernsehbildröhre aufgebrachten Schichten die Diffusion der Metallverbindung zu gering ist, um noch einen akzeptablen Ausheizeffekt zu bewirken.

Die Erfindung hat die Aufgabe, das Ausheizen der polymeren organischen Stoffe, also z.B. der zuvor erwähnten Bindemittel, Sedimentationsflüssigkeiten, elektrisch leitfähigen und photoleitfähigen Stoffe, zu beschleunigen und bei niedrigerer Temperatur zu ermöglichen. Es soll demnach ein verbessertes Ausheizverfahren geschaffen werden, bei dem das Ausheizen, bei dem es sich im wesentlichen um eine oxidative Zersetzung handelt, die zu einem Verschwinden der polymeren Bestandteile führt, bei niedrigeren Temperaturen als bisher bekannt erfolgt, ohne dass dabei

a) die Ausheizzeit verlängert wird und

b) ein nachteiliger Einfluss auf die Eigenschaften der Formkörper oder Schichten eintritt.

Diese Aufgabe wird erfindungsgemäss mit einem Verfahren der eingangs genannten Art gelöst, indem mindestens eine metallorganische Verbindung der allgemeinen Formel

$$M \quad R_n$$

in der

M = $V^{III}$, $Mn^{II}$, $Mn^{III}$, $In^{III}$, Ca, $Co^{III}$, $Ni^{II}$, $(VO)^{II}$ oder $(VO)^{III}$

n = 2 oder 3

R = ein organischer Rest der Verbindungsklassen mehrfach ungesättigte Verbindungen, Aminoalkohole, Carbonsäuren, Hydroxycarbonsäuren, Mercaptocarbonsäuren, enolisierbare Ketone, Ketoxime, Aldoxime, Amine und Phosphine,

die imstande ist, bei Erhitzung auf 150 bis 420°C in ein Oxid von M überzugehen, ausgenommen Nickeldimethylglyoxim, im Ausgangsgemisch gelöst oder dem Ausgangsgemisch in gelöster Form zugesetzt wird, und dass das Ausheizen bei höchstens 420°C vorgenommen wird.

Der eigentlich beim Ausheizen wirksame Bestandteil ist das Metalloxid. Da dieses aber in dem für die polymeren organischen Stoffe geeigneten Lösungsmittel, z.B. Chlorbenzol oder Tetrahydrofuran, nicht löslich ist, werden die metallorganischen Verbindungen gewählt, die in diesen Lösungsmitteln gut löslich sind und während des Ausheizens in Oxide übergehen, so dass diese Oxide im Formkörper oder in der Schicht homogen und molekular verteilt vorliegen und so das Ausheizen maximal beschleunigen. Unter «gut löslich» sind im Rahmen der Erfindung Löslichkeiten von 1 bis 10% (Gew./Gew.) zu verstehen.

Vorzugsweise werden aus den genannten Klassen von organischen Stoffen diejenigen gewählt, die neben Kohlenstoff und Wasserstoff noch Sauerstoff und/oder Stickstoff enthalten. Verbindungen, die noch andere Elemente, z.B. Schwefel oder Phosphor, enthalten, sind wegen der Nebenprodukte, die sie während der oxidativen Zersetzung bilden, z.B. Schwefeldioxid und Phosphoroxid, weniger erwünscht.

Beispiele für bevorzugte Verbindungen sind Metalloctoate und -naphthenate und Metallverbindungen von Acetylaceton, Acetessigestern und Dimethylglyoxim, ausgenommen Nickeldimethylglyoxim. Besonders bevorzugte Verbindungen sind:

$Mn(C_5H_7O_2)_3$ Mangan(III)-acetylacetonat

$VO(C_5H_7O_2)_2$ Vanadiumoxyacetylacetonat

$V(C_5H_7O_2)_3$ Vanadiumacetylacetonat

$VO[N(CH_3)_2]_3$ Tris-(dimethylamino)-vanadyl

Die Ausheiztemperatur sinkt mit zunehmender Konzentration an metallorganischer Verbindung ab. Vorzugsweise werden daher Konzentrationen von 0,5 bis 3%, bezogen auf das Gewicht der polymeren organischen Stoffe, angewendet.

Bei der qualitativen und quantitativen Auswahl der metallorganischen Verbindungen ist zu beachten, dass die Eigenschaften der polymeren Stoffe, also z.B. der Bindemittel, der Sedimentationsflüssigkeit, der elektrisch leitfähigen Schichten und der photoleitfähigen Schichten, vor dem Ausheizen nicht oder nur sehr wenig beeinflusst werden. Bei dieser Auswahl ist es aber auf einfache Weise möglich, durch Vorversuche zu klären, wie weitgehend z.B. der negative Einfluss der ausgewählten Verbindung auf die Photoleitfähigkeit einer Poly-N-vinylkarbazol-Schicht ist. Ferner kann die Zersetzungstemperatur der ausgewählten metallorganischen Verbindung auf einfache Weise durch Vorversuche bestimmt werden.

Die Vorteile des erfindungsgemässen Verfahrens liegen insbesondere darin, dass ein einfaches Zufügen der metallorganischen Verbindungen in geringen Mengen zur Lösung des photoleitfähigen Materials die Ausheizprobleme löst und dass keine Änderungen der Herstellungsprozesse für die Formkörper und Schichten notwendig sind.

Die Erfindung wird anhand einiger Ausführungsbeispiele näher erläutert.

*Beispiel 1*

Zu einer Lösung von 60 Gramm Poly-N-vinylkarbazol (PVK) pro Liter Chlorbenzol und 12 Gramm eines Dialkylphthalats als Weichmacher wird zusätzlich 1 Gew.-% Mangan(III)-tris-2,4-pentandionat (0,6 Gramm) zugegeben und die Mischung über Nacht gerührt, bis eine klare Lösung erhalten wird.

Mit dieser Lösung wird eine photoleitende Schicht durch Sprühen auf eine Frontplatte, die bereits mit einer elektrisch leitfähigen Schicht beschichtet ist, aufgebracht, wobei die Viskosität durch Zugabe von Chlorbenzol eingestellt werden kann.

Anstelle von Chlorbenzol werden in Abwandlung dieses Beispiels auch THF und Methylenchlorid verwendet, wobei 60 g PVK in jeweils 1 l THF bzw. Methylenchlorid gelöst werden. Ferner wird die photoleitende Schicht statt durch Sprühen durch Schleudern oder Streichen aufgebracht.

Um Lösungen mit einem höheren Mangan(III)-acetylacetonat-Gehalt zu erhalten, wird in Abwandlung dieses Beispiels von einer konzentrierten PVK-Weichmacher-Lösung in Chlorbenzol oder THF und einer konzentrierten Lösung der Mangan(III)-Verbindung ausgegangen. Auf diese Weise werden Schwierigkeiten beim Lösen des Mangan(III)-acetylacetonats vermieden. Ausgehend von einer 5 gew.%igen Lösung einer Mn(III)-Verbindung und einer 100 g/l PVK-Lösung mischt man die gewünschten Mengen zusammen, um eine Lösung, die etwa 60 g/l PVK und 3 Gew.-% Mangan(III)-Verbindung (bezogen auf das PVK-Gewicht) enthält, zu bekommen und rührt die entstandene Mischung mindestens 24 Stunden.

Anschliessend werden auf elektrophotographischem Wege die drei verschiedenen Leuchtstoffe in den Schirm eingebracht und die leitfähigen und photoleitfähigen Schichten ausgeheizt. Schichten ohne Zusatz von Mangan(III)-Verbindung müssen bis 450°C ausgeheizt werden, während Schichten mit einem Zusatz von 1 oder 3 Gew.-% Manganverbindung nur bis 420 bzw. 400°C aufgeheizt werden müssen, um die organischen Materialien völlig auszuheizen. Die geringen zurückbleibenden Reste an Metalloxid stören nachher in den fertigen Röhren nicht, d.h. die Helligkeit der Leuchtstoffe bleibt unbeeinflusst.

*Beispiel 2*

Zu einer Lösung von 60 Gramm Poly-N-vinylkarbazol mit 20% eines Weichmachers pro Liter Chlorbenzol wie in Beispiel 1 beschrieben, wird 0,6 Gramm Vanadium (III)Oxid-bis-(2,4-pentandionat) zugegeben und die Mischung über Nacht gerührt. Mit dieser Lösung kann ähnlich wie in Beispiel 1 die photoleitende Schicht auf die Frontplatte gebracht werden.

Auch Lösungen mit einem höheren Vanadiumoxidtris-acetylacetonat-Gehalt können hergestellt werden. Zuerst werden eine 5 gew.%ige Lösung der Vanadium(III)-Oxid-Verbindung in Chlorbenzol (oder THF) und eine 100 g/l PVK-Lösung hergestellt. Die beiden Lösungen mischt man, so dass eine 60 g/l PVK- mit 3 Gew.-% Vanadium(III)-Oxid-tris-acetylacetonat-Lösung erhalten wird, und rührt die entstandene Mischung mindestens 24 Stunden. Anschliessend werden, wie zuvor beschrieben, die drei verschiedenen Leuchtstoffe in den Schirm eingebracht und die leitfähigen und photoleitfähigen Schichten ausgeheizt. Schichten mit einem Zusatz von 1 oder 3 Gew.-% Vanadiumoxid-Verbindung können bei niedriger Temperatur (etwa 420 bzw. 400°C) völlig ausgeheizt werden.

**Patentansprüche**

1. Verfahren zum Herstellen von Formkörpern oder Schichten aus anorganischen Stoffen, bei dem einem Ausgangsgemisch, das die anorganischen Stoffe enthält, polymere organische Stoffe zugesetzt werden, die später durch Ausheizen wieder entfernt werden, dadurch gekennzeichnet, dass mindestens eine metallorganische Verbindung der allgemeinen Formel

$$M \quad R_n$$

in der

$M = V^{III}, Mn^{II}, Mn^{III}, In^{III}, Ca, Co^{III}, Ni^{II}, (VO)^{II}$ oder $(VO)^{III}$

$n = 2$ oder 3

R = ein organischer Rest der Verbindungsklassen mehrfach ungesättigte Verbindungen, Aminosäuren, Carbonsäuren, Hydroxycarbonsäuren, Mercaptocarbonsäuren, enolisierbare Ketone, Ketoxime, Aldoxime, Amine und Phosphine,

die imstande ist, bei Erhitzung auf 150 bis 420°C in ein Oxid von M überzugehen, ausgenommen Nickeldimethylglyoxim, im Ausgangsgemisch gelöst oder dem Ausgangsgemisch in gelöster Form zugesetzt wird, und dass das Ausheizen bei höchstens 420°C vorgenommen wird.

2. Verfahren nach Anspruch 1, dadurch gekennzeichnet, dass die metallorganische Verbindung neben Kohlenstoff und Wasserstoff noch Sauerstoff und/oder Stickstoff enthält.

3. Verfahren nach Anspruch 2, dadurch gekennzeichnet, dass als metallorganische Verbindung Metalloctoate oder -naphthenate oder Metallverbindungen von Acetylaceton, Acetessigestern und Dimethylglyoxim, ausgenommen Nickeldimethylglyoxim, verwendet werden.

4. Verfahren nach Anspruch 3, dadurch gekennzeichnet, dass mindestens eine der folgenden metallorganischen Verbindungen verwendet wird: Mangan(III)-acetylacetonat, Vanadiumoxyacetylacetonat, Vanadiumacetylacetonat und/oder Tris-(dimethylamino)-vanadyl.

5. Verfahren nach Anspruch 1 bis 4, dadurch gekennzeichnet, dass die metallorganische Verbindung in einer Konzentration von 0,5 bis 3%, bezogen auf das Gewicht der polymeren organischen Stoffe, verwendet wird.

**Claims**

1. A method of producing mouldings or layers of inorganic materials in which polymeric organic materials which are afterwards removed by combustion, are added to a starting mixture containing the inorganic materials, characterized in that at least a metal organic compound defined by the general formula

$$M \quad R_n$$

wherein
M = $V^{III}$, $Mn^{II}$, $Mn^{III}$, $In^{III}$, Ca, $Co^{III}$, $Ni^{II}$, $(VO)^{II}$ or $(VO)^{III}$
n = 2 or 3
R = an organic radical of the compound classes of polyunsaturated compounds, amino acids, carboxylic acids, hydroxycarboxylic acids, mercaptocarboxylic acids, enolisable ketones, ketoximes, aldoximes, amines or phosphines,
which is capable of changing into an oxide of M when heated to 150 to 420°C, with exclusion of nickeldimethylglyoxime, is dissolved in the starting mixture or added as a solution to the starting mixture, and that combustion is effected at not more than 420°C.

2. A method as claimed in claim 1, characterized in that the metal organic compound does not only contain carbon and hydrogen but also oxygen and/or nitrogen.

3. A method as claimed in claim 2, characterized in that metal octoates or naphthenates or metal compounds of acetylacetone, acetic acid esters or dimethyl glyoxime are used as the metal organic compound.

4. A method as claimed in claim 3, characterized in that at least one of the following metal organic compounds are used: manganese (III)-acetylacetonate, vanadium oxy-acetylacetonate, vanadium acetylacetonate and tris-(dimethylamino)-vanadyl.

5. A method as claimed in claim 1 to 4, characterized in that the metal organic compound is used in a concentration of 0.5 to 3%, calculated with respect to the weight of the polymeric organic materials.

**Revendications**

1. Procédé pour la préparation d'objets façonnés ou de couches en matériaux inorganiques, selon lequel un mélange de départ contenant les matériaux inorganiques est additionné de matériaux organiques polymères qui sont enlevés plus tard par chauffage, caractérisé en ce qu'au moins un composé métallo-organique répondant à la formule générale

$$M \quad R_n$$

dans laquelle
M = $V^{III}$, $Mn^{II}$, $Mn^{III}$, $In^{III}$, Ca, $Co^{III}$, $Ni^{II}$, $(VO)^{II}$ ou $(VO)^{III}$
n = 2 ou 3
R = un reste organique de groupes de composés à plusieurs reprises non saturées, alcools amino, acides carboxyliques, acides hydroxy-carboxyliques, acides mercaptocarboxyliques, cétones-énolisables, cétoximes, aldoximes, amines et phosphines, qui est à même de passer par chauffage à 150 à 420°C en un oxyde de M, abstraction faite de la diméthylglyoxime de nickel, dissous dans le mélange de départ ou additionné au mélange de départ sous forme dissoute, et que le chauffage s'effectue à au moins 420°C.

2. Procédé selon la revendication 1, caractérisé en ce que le composé métallo-organique contient, outre le carbone et l'hydrogène, également l'hydrogène et/ou l'azote.

3. Procédé selon la revendication 2, caractérisé en ce que comme composé métallo-organique sont utilisés des octoates ou des naphthanates métalliques ou des composés métalliques d'acétylacétone, d'éthers acétiques et de diméthylglyoxime, abstraction faite la diméthylglyoxime de nickel.

4. Procédé selon la revendication 3, caractérisé en ce qu'au moins l'un des composés métallo-organiques suivants sont utilisés: l'acétylacétonate de manganèse (III), l'oxyacétylacétonate de vanadium, l'acétylacétonate de vanadium et/ou le tris(diméthylamino)vanadyl.

5. Procédé selon la revendication 4, caractérisé en ce que le composé métallo-organique est utilisé dans une concentration de 0,5 à 3% en poids, rapportée au poids des matériaux organiques polymères.